# FASCICULE DE BREVET EUROPEEN

(11) **EP 3 207 275 B1**
(45) Date de publication et mention de la délivrance du brevet: **27.11.2019**
(21) Numéro de dépôt: 15786999.1
(22) Date de dépôt: 02.10.2015
(51) Int. Cl.: F16F 13/10, F16F 13/18

(54) **CALE AMORTISSANTE A SYSTEME HYDRAULIQUE MULTI-COLONNES**
DÄMPFUNGSEINHEIT MIT EINEM HYDRAULIKSYSTEM MIT MEHREREN SÄULEN
DAMPING BLOCK WITH MULTI-COLUMN HYDRAULIC SYSTEM

(30) Priorité: 15.10.2014 FR 1459877
(43) Date de publication de la demande: 23.08.2017
(73) Titulaire: PSA Automobiles SA, 78300 Poissy (FR)
(72) Inventeur: SAUVAGE, Olivier, F-92800 Puteaux (FR); CHILLON, Jean, F-92100 Boulogne Billancourt (FR); ROTA, Laurent, F-91530 St Cheron (FR)
(86) Numéro de dépôt international: PCT/FR2015/052650
(87) Numéro de publication internationale: WO 2016/059315

(56) Documents cités:
- EP-A2- 0 384 966
- US-A- 4 401 298
- US-A- 6 068 246

## Description

La présente invention porte sur une cale amortissante à système hydraulique multi-colonnes. L'invention trouve une application particulièrement avantageuse, mais non exclusive, pour la suspension des moteurs dans les véhicules automobiles.

Les cales hydrauliques classiques comportent une colonne de fluide résonnante unique, comme cela est décrit par exemple dans le document US4720086. On connaît également des cales amortissantes à base d'élastomère comportant un système hydraulique muni de plusieurs colonnes de fluide en communication avec plusieurs chambres capables de gonflement contenant également du fluide. Les documents DE3245653A1 et EP0462510 enseignent ainsi la réalisation d'une cale munie d'une chambre de gonflement principale ayant une raideur de gonflement significative, apte à faire travailler le fluide, ainsi que des chambres de gonflement propres à chaque colonne.

L'invention vise à perfectionner les cales existantes en proposant une cale amortissante hydraulique comportant:
- au moins deux colonnes de fluide,
- chaque colonne ayant une extrémité mise en communication avec une première chambre de travail hydraulique capable de gonflement hydraulique, dite aussi chambre de gonflement principale, cette chambre de gonflement principale étant commune à toutes les colonnes de fluide,
- l'autre extrémité de chaque colonne de fluide étant mise en communication avec une deuxième chambre de compensation hydraulique spécifique à chaque colonne de fluide, ces deuxièmes chambres, dites aussi chambres de gonflement propres, étant également capables de gonflement hydraulique,
caractérisée en ce qu'au moins une des chambres de gonflement propres a une raideur de gonflement de l'ordre de grandeur de la raideur de gonflement de la chambre de gonflement principale, ou supérieure à la raideur de gonflement de la chambre de gonflement principale.

Du fait de cette configuration dans laquelle au moins une des chambres de gonflement propres a un potentiel élastique de gonflement important, l'invention permet la réalisation de cales ayant des capacités de filtrage et d'amortissement accrues par rapport aux cales hydrauliques classiques. Ainsi, la cale selon l'invention pourra présenter un maximum de facteur de perte plus élevé, et/ou un facteur de perte de niveau élevé sur une plus large bande de fréquences, et/ou un facteur de perte de niveau important sur plusieurs bandes de fréquences disjointes, ceci pour une semblable différence entre la raideur aux fréquences les plus élevées et la raideur statique (à 0 Hz). La cale selon l'invention pourra aussi présenter un ou plusieurs creux de raideur dynamique au voisinage de fréquences particulières, avantageux pour le filtrage vibratoire du véhicule dans lequel la cale s'intègre. L'invention permet ainsi de mieux maîtriser les niveaux vibratoires perceptibles dans le véhicule, influencés notamment par les différents modes propres de suspension du groupe-moto-propulseur, particulièrement les niveaux pilotés par le mode dit de "hachis moteur" qui impacte fortement la prestation dite de "trépidations" au niveau du véhicule. Plus généralement, l'architecture et les préconisations de dimensionnement de la présente invention permettent de réaliser une catégorie de cales hydrauliques qui possèdent des lois de comportement particulièrement avantageuses pour les prestations de filtrage et d'amortissement vibro-acoustiques nécessaires à un bon confort dans une automobile.

Selon une réalisation, au moins une des chambres de gonflement propres a une raideur de gonflement entre 1,2 fois et 100 fois plus grande que la raideur de gonflement de la chambre de gonflement principale.

Selon une réalisation, au moins une des chambres de gonflement propres a une raideur de gonflement dont la valeur est comprise entre 0,5 fois et 1,5 fois la valeur de la raideur de gonflement de la chambre de gonflement principale.

Selon une réalisation, au moins une des chambres de gonflement propres a une raideur de gonflement plus faible que la raideur de gonflement de la chambre de gonflement principale.

Selon une réalisation, au moins une des chambres de gonflement propres a une raideur de gonflement entre 1,2 fois et 10 fois plus faible que la raideur de gonflement de la chambre de gonflement principale.

Selon une réalisation, au moins un ratio d'un couple de valeurs parmi les raideurs de gonflement des chambres de gonflement propres est d'au moins 2.

Selon une réalisation, au moins un ratio d'un couple de valeurs parmi les raideurs de gonflement des chambres de gonflement propres est d'au moins 5.

Selon une réalisation, au moins une extrémité d'au moins une colonne de fluide présente une embouchure dans une chambre de gonflement ayant un changement brusque de section. Cela permet d'augmenter les pertes de charges.

Selon une réalisation, au moins une extrémité d'au moins une colonne de fluide présente une embouchure dans une chambre de gonflement ayant un changement progressif de section. Cela permet de réduire les pertes de charges.

Selon une réalisation, les colonnes de fluide sont configurées pour générer des pertes de charges hydrauliques différentes les unes par rapport aux autres.

Selon une réalisation, certaines chambres de gonflement ont une capacité de gonflement hydraulique ou une raideur de gonflement non linéaire en fonction du volume de fluide contenu.

Selon une réalisation, la cale comporte un serpentin capable de gonflement assurant à la fois les fonctions hydrauliques de colonne de fluide et de chambre de gonflement propre.

Selon une réalisation, la cale comporte des systèmes destinés à un découplage hydraulique aux hautes fréquences et/ou aux faibles amplitudes agissant sur tout ou partie des effets des colonnes de fluide.

Selon une réalisation, la cale comporte un capuchon participant à la formation et au maintien en position de chambres de gonflement propres, ledit capuchon étant apte à être fermé par rapport à l'extérieur ou mettre une membrane délimitant une des chambres de gonflement propres en relation avec la pression atmosphérique.

Selon une réalisation, tout ou partie des colonnes de fluide et des chambres de gonflement propres sont positionnées dans une zone extérieure de la chambre de gonflement principale.

Selon une réalisation, une ou plusieurs des chambres de gonflement propres sont fusionnées entre elles.

L'invention concerne aussi un ensemble comprenant un premier élément et un second élément caractérisé en ce qu'il comporte une cale selon l'une quelconque des revendications précédentes comportant deux zones d'interface une des zones d'interface étant reliée au premier élément, l'autre zone d'interface étant reliée au second élément.

Selon une réalisation, le premier élément est un moteur et le second élément une structure de véhicule.

L'invention concerne aussi un véhicule comprenant un ensemble selon l'une des variantes précédemment décrites.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique fonctionnelle de la cale amortissante à système hydraulique multi-colonnes selon la présente invention ;
La figure 2 est une vue en coupe faisant apparaître les zones intérieure et extérieure de la cale amortissante selon la présente invention ;
Les figures 3 à 9 montrent des exemples d'agencements possibles des colonnes de fluide et des différentes chambres de gonflement d'une cale amortissante selon la présente invention ;
Les figures 10a et 10b représentent des courbes caractéristiques de raideur dynamique et de facteur de perte d'une cale amortissante selon la présente invention, ainsi que les courbes caractéristiques usuelles d'une cale amortissante selon l'état de la technique à colonne de fluide unique ;
Les figures 11a et 11b représentent des courbes caractéristiques de raideur dynamique et de facteur de perte d'une cale amortissante selon la présente invention réalisée suivant une autre configuration que celle des figures 10a et 10b, ainsi que les courbes caractéristiques usuelles d'une cale amortissante selon l'état de la technique à colonne de fluide unique.

Les éléments identiques, similaires, ou analogues conservent la même référence d'une figure à l'autre. Par ailleurs, il est à noter que les dessins sont schématiques et ne sont donc pas à l'échelle.

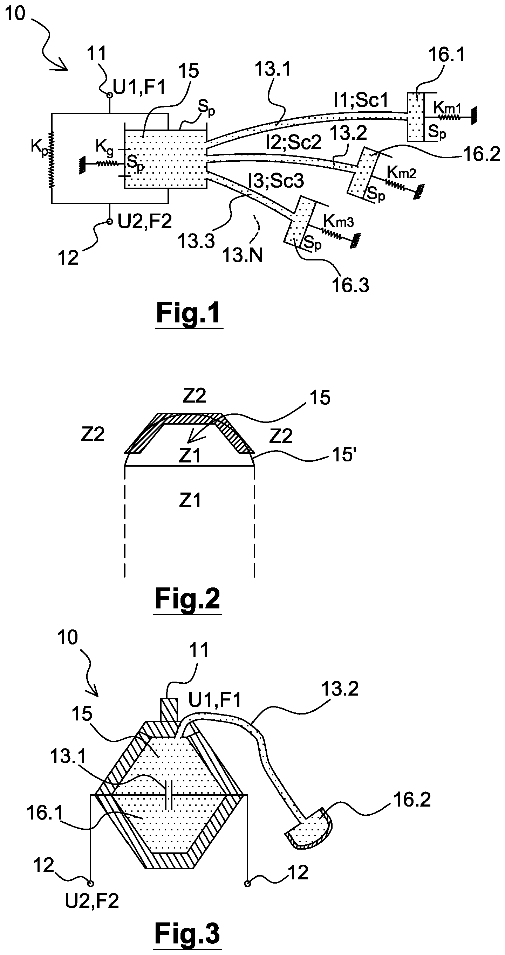

La figure 1 est une représentation schématique fonctionnelle d'une cale 10 amortissante hydraulique multi-colonnes selon la présente invention. Cette cale 10 comporte deux zones d'interface référencées 11 et 12. Une des zones d'interface 11, 12 est reliée au moteur tandis que l'autre zone d'interface 11, 12 est reliée à la structure du véhicule. Ces zones d'interface 11, 12 enregistrent des déplacements notés respectivement u1 et u2 et des efforts notés respectivement F1 et F2. La cale 10 amortissante est ici décrite comme étant reliée à un moteur et une structure de véhicule, cependant cette cale 10 convient pour être disposée dans tout ensemble d'un véhicule ou autre qu'un véhicule comprenant deux éléments pouvant avoir un débattement relatif autre qu'un moteur et une structure de véhicule.

La cale 10 comporte des colonnes remplies de fluide 13.1-13.N ayant chacune une longueur li et une section Sci (i correspondant à l'indice de la colonne). Les colonnes de fluide 13.1-13.N présentent une section Sci pouvant prendre toutes les formes jugées utiles, notamment une forme circulaire, carrée, ou rectangulaire. Le nombre N des colonnes de fluide est par exemple compris entre 2 et 50.

Chaque colonne de fluide 13.1-13.N a une extrémité mise en communication avec une première chambre hydraulique 15 capable de gonflement hydraulique, appelée chambre de gonflement principale ou encore chambre de travail. Cette chambre 15 est en contact avec des zones d'interface 11, 12 qui sont destinées à être reliées au moteur et la structure du véhicule. Cette chambre 15 est commune à toutes les colonnes de fluide 13.1-13.N.

L'autre extrémité de chaque colonne de fluide 13.1-13.N est mise en communication avec une deuxième chambre hydraulique 16.1-16.N spécifique à chaque colonne 13.1-13.N. Ces deuxièmes chambres 16.1-16.N, dites chambres de gonflement propres ou chambres de compensation, sont également capables de gonflement hydraulique. Il n'existe pas de liaison hydraulique directe entre ces chambres de gonflement propres 16.1-16.N.

On distingue une chambre de travail d'une chambre de compensation par le fait que lorsqu'on obstrue les endroits de la paroi de ces chambres fluides par où le fluide peut circuler en dehors de ces dites chambres, c'est-à-dire lorsqu'on obstrue ou bouche complètement les colonnes et les éventuels systèmes de clapets, et lorsque dans cette situation on applique un déplacement relatif entre les deux zones d'interface 11 et 12, c'est-à-dire lorsqu'on provoque un mouvement relatif entre les deux éléments de structure reliés aux zones d'interface 11 et 12, par exemple entre le moteur et la caisse du véhicule,
alors :
- une chambre de travail, ici la chambre de gonflement principale 15, travaille, c'est-à-dire que le fluide qu'elle contient fait se déformer sa paroi flexible sous l'action du déplacement relatif imposé aux interfaces 11 et 12; dit autrement on fait travailler la raideur de gonflement représentée par Kg sur notre fig. 1 ;
- une chambre de compensation, ici les chambres de gonflement propres, ne travaille pas, c'est-à-dire que le déplacement relatif imposé ne provoque pas de déformation de sa paroi flexible ; dit autrement on ne fait pas travailler les raideurs de gonflement représentées par Kmi sur notre fig. 1 .

Chaque chambre de gonflement 15, 16.1-16.N, qui comporte une paroi déformable, est caractérisée classiquement par une raideur dite de gonflement, exprimée en unité de force par unité de longueur, définie par rapport à une surface de référence commune fixée, appelée surface de piston, qui est notée Sp sur la figure 1 et qui vaut pour toutes les raideurs de gonflement des chambres fluides. La raideur de gonflement de la chambre de gonflement principale 15 est notée Kg. Les raideurs de gonflement des chambres de gonflement propres 16.1-16.N à chaque colonne de fluide 13.1-13.N sont notées Kmi. Par ailleurs, en fonctionnement statique et en l'absence de fluide, la cale 10 est équivalente à la raideur porteuse seule notée Kp. Il est à noter que la cale 10 a un comportement passif, dans la mesure où elle ne met pas en œuvre une boucle de contrôle ou de rétroaction électro-mécanique.

Conformément à l'invention, au moins une des chambres de gonflement propres 16.1-16.N a une raideur de gonflement Kmi de l'ordre de grandeur, ou supérieure, à la raideur de gonflement Kg de la chambre de gonflement principale 15. Dans un exemple de réalisation, une des chambres de gonflement propres 16.1-16.N a une raideur de gonflement Kmi qui est 1,2 fois plus grande que celle de la chambre de gonflement principale 15. Cette raideur de gonflement Kmi pourra être alternativement significativement plus élevée, par exemple 2 ou 3 fois plus grande, voire d'un ou plusieurs ordres de grandeur plus élevée, par exemple 10 fois ou 100 fois plus élevée. Une des chambres de gonflement propres 16.1-16.N pourra avoir une raideur de gonflement dont la valeur est comprise entre 0,5 fois et 1,5 fois la valeur de la raideur de gonflement de la chambre de gonflement principale 15.

Par ailleurs, au moins une des chambres de gonflement propres 16.1-16.N a une raideur de gonflement Kmj plus faible que la raideur de gonflement de la chambre principale Kg. De préférence, cette ou ces chambres de gonflement propres ont une raideur de gonflement plus faible que la chambre de gonflement principale 15 d'un facteur 10 ou 20 ou plus encore, en sorte que cette ou ces chambres de gonflement propre se comportent, relativement à la chambre principale, plus comme un réservoir de fluide que comme un ballon hydraulique capable de générer de fortes pressions. Dans certains cas, cette ou ces chambres de gonflement propres ont une raideur de gonflement Kmj qui est 1,2 fois, ou 2 fois, ou 3 fois, ou 5 fois plus faible que la raideur de gonflement de la chambre principale Kg.

De préférence, au moins un ratio d'un couple de valeurs {Kmi,Kmj} parmi les raideurs de gonflement des chambres de gonflement propres est d'au moins 2 et avantageusement d'au moins 5.

Comme cela est visible sur la figure 2, la forme de la chambre de gonflement principale 15 s'approche au premier ordre d'une demi-calotte sphérique 15', ce qui définit deux zones, à savoir une zone intérieure Z1 tournée vers l'intérieur de la demi-calotte sphérique 15' et une zone extérieure Z2 tournée vers l'extérieur de la demi-calotte sphérique 15'.

Dans les exemples d'agencement montrés sur les figures 3 à 9, on peut distinguer les situations en fonction de la position des différents éléments (colonnes 13.1-13.N et leurs chambres de gonflement propres 16.1-16.N) selon qu'ils sont placés vers l'intérieur ou l'extérieur de la chambre de gonflement principale 15. Un des avantages de positionner une colonne 13.1-13.N du côté extérieur de la chambre 15 est de pouvoir lui conférer une grande longueur li et/ou une grande aire de section Sci. Une des manières de réaliser en pratique des colonnes de grande longueur est de les faire s'enrouler sur plusieurs tours si nécessaire. Pour tous les exemples présentés ici, la raideur de gonflement Kg caractérisant la chambre de gonflement principale 15 est par exemple de l'ordre de 100 newtons par millimètre, en considérant une surface de piston d'une vingtaine de centimètres carrés.

Plus précisément, dans le mode de réalisation de la figure 3, la cale 10 comporte deux colonnes de fluide 13.1 et 13.2. La première colonne de fluide 13.1 et sa chambre de gonflement propre 16.1 sont positionnées vers l'intérieur de la chambre de gonflement principale 15, tandis que l'autre colonne de fluide 13.2 et sa chambre de gonflement propre 16.2 sont positionnées vers l'extérieur de la chambre de gonflement principale 15. La deuxième colonne 13.2 est par exemple raccordée au niveau de la partie supérieure de la chambre de gonflement principale 15.

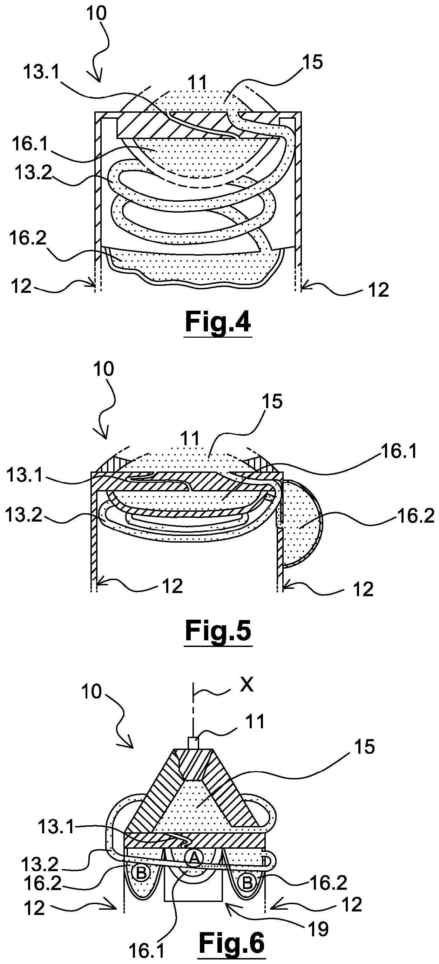

Dans le mode de réalisation de la figure 4, la cale 10 comporte deux colonnes de fluide 13.1 et 13.2. Les deux colonnes de fluide 13.1 et 13.2 sont positionnées vers l'intérieur de la chambre de gonflement principale 15. Les deux chambres de gonflement propres 16.1 et 16.2 correspondantes sont également positionnées vers l'intérieur de la chambre de gonflement principale 15.

Dans le mode de réalisation de la figure 5, la cale 10 comporte deux colonnes de fluide 13.1 et 13.2. Les deux colonnes de fluide 13.1 et 13.2 sont positionnées vers l'intérieur de la chambre de gonflement principale 15. La chambre de gonflement propre 16.1 de la première colonne de fluide 13.1 est positionnée vers l'intérieur de la chambre de gonflement principale 15; tandis que la chambre de gonflement propre 16.2 de la deuxième colonne 13.2 est positionnée vers l'extérieur de la chambre de gonflement principale 15.

Dans le mode de réalisation de la figure 6, la cale 10 comporte deux colonnes de fluide 13.1 et 13.2. La première colonne 13.1 est tournée vers l'intérieur de la chambre de gonflement principale 15. La deuxième colonne 13.2 est tournée vers l'extérieur de la chambre de gonflement principale 15. Les deux chambres de gonflement propres 16.1, 16.2 sont tournées vers l'intérieur de la chambre de gonflement principale 15. Ces deux chambres de gonflement propres 16.1, 16.2 sont par exemple concentriques, de révolution autour de l'axe vertical X de la cale 10, chacune bordant un volume (le volume A pour la chambre de la colonne 13.1, le volume B pour la chambre de la colonne 13.2). Le capuchon 19, participant à la formation et au maintien en position des chambres de gonflement propres 16.1 et 16.2, peut être fermé par rapport à l'extérieur ou mettre le côté extérieur de la membrane délimitant la chambre 16.1 en contact avec la pression atmosphérique, via une ouverture. Un des avantages d'un tel agencement est d'autoriser au moins une colonne extérieure (donc, potentiellement volumineuse) tout en permettant de loger dans un espace limité les chambres de gonflement propres 16.1, 16.2. En outre, selon une variante de réalisation, les parois déformables permettant de délimiter les chambres propres 16.1 et 16.2 peuvent être réalisées à partir du même morceau de matière.

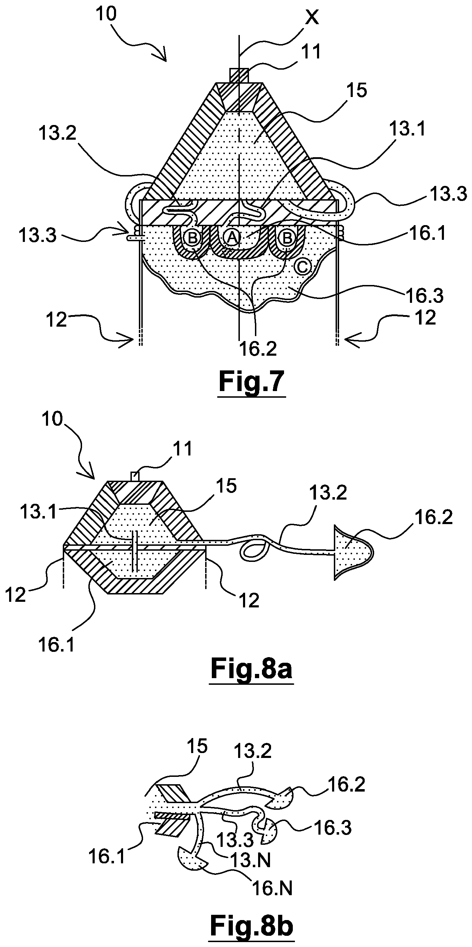

Dans le mode de réalisation de la figure 7 proche de celui de la figure 6, la cale 10 comporte trois colonnes 13.1, 13.2, 13.3. La chambre de gonflement propre 16.3 a une raideur de gonflement Km3 très faible par rapport à celles Km1, Km2 des deux autres chambres de gonflement propres 16.1 et 16.2. La chambre de gonflement 16.3 est réalisée typiquement par une membrane souple, laquelle est placée du côté intérieur et borde un volume de fluide C délimité également par les parois externes de tout ou partie des autres chambres de gonflement propres 16.1 et 16.2. La colonne de fluide 13.3 est enroulée à l'extérieur sur plusieurs tours.

Dans le mode de réalisation de la figure 8a, la cale 10 comporte deux colonnes 13.1 et 13.2. La première colonne 13.1 et sa chambre de gonflement propre 16.1 sont tournées vers l'intérieur de la chambre de gonflement principale 15, tandis que la deuxième colonne 13.2 et sa chambre de gonflement propre 16.2 sont tournées vers l'extérieur de la chambre de gonflement principale 15. La deuxième colonne 13.2 est par exemple raccordée au niveau de la partie inférieure de la chambre de gonflement principale 15. La figure 8b montre le cas dans lequel on utilise N colonnes de fluide selon le même mode d'agencement. On a alors N-1 colonnes de fluide et leurs chambres propres de gonflement propres 16.2-16.N qui sont positionnées vers l'extérieur de la chambre de gonflement principale 15.

Il est à noter que pour les modes de réalisation des figures 6, 8a, et 8b, la mise en communication entre la chambre principale 15 et les colonnes de fluide extérieures 13.2, 13.3, 13.N pourra être effectuée en ménageant une ouverture dans la structure intermédiaire qui sépare la chambre principale 15 par rapport aux chambres de gonflement propres inférieures, comme cela est le cas dans le mode de réalisation illustré à la figure 7.

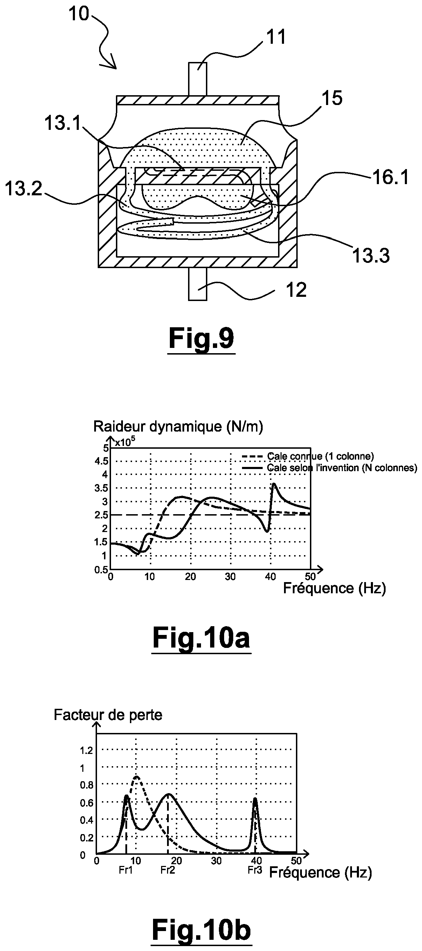

Dans le mode de réalisation de la figure 9, la cale 10 comporte trois colonnes hydrauliques 13.1, 13.2, et 13.3. La première colonne 13.1 est une colonne classique à paroi rigide débouchant d'une part dans la chambre de gonflement principale 15 et d'autre part dans une chambre de gonflement propre 16.1. Les deux autres colonnes 13.2 et 13.3 sont formées chacune par un serpentin allongé et capable de gonflement radial, assurant à la fois les fonctions hydrauliques de colonne inertielle et de chambre de gonflement propre. Les colonnes 13.2 et 13.3 sont enroulées dans la partie intérieure de la chambre de gonflement principale 15. Cette disposition particulière des deux colonnes 13.2 et 13.3 permet de ne pas produire de brusque saut de section fluide entre la colonne et la chambre de gonflement propre correspondante, ce qui réduit les pertes de charges singulières. La réduction des pertes de charges dans un ou plusieurs des sous-systèmes hydrauliques résonants de la cale hydraulique multi-colonnes 10 peut en effet être une stratégie de réglage optimal pour les lois de comportement de la cale.

Tous les exemples donnés dans les figures 3 à 9 peuvent aisément se généraliser au cas où l'on utilise N colonnes et chambres de gonflement propres 16.1-16.N, tout ou partie de ces différents éléments pouvant être positionnés dans la zone extérieure de la chambre de gonflement principale. Par ailleurs, il est possible si cela s'avère nécessaire ou opportun de fusionner une ou plusieurs des chambres de gonflement propres 16.1-16.N.

Dans tous les cas, on peut envisager d'installer, en dérivation tout ou partie des colonnes fluides 13.1-13.N et avec des caractéristiques au besoin particularisées pour chaque colonne, des systèmes bien connus de type clapets ou autres systèmes destinés au découplage hydraulique aux hautes fréquences et/ou aux faibles amplitudes, c'est-à-dire destinés à diminuer la raideur dynamique caractérisant la cale 10 au-delà des fréquences de résonance des colonnes fluides. Ces clapets sont installés en parallèle d'une ou plusieurs colonnes 13.1-13.N et court-circuitent la ou les colonnes quand les mouvements de fluide sont de trop faible amplitude et/ou de fréquence élevée.

Les extrémités de certaines colonnes de fluide 13.1-13.N pourront présenter une embouchure dans une chambre de gonflement 15, 16.1-16.N ayant un changement brusque de section. Ce changement brusque de section est constitué par exemple par un ajutage à angle droit. Ces ajutages situés par exemple en entrée et en sortie de certaines colonnes 13.1-13.N permettent de générer des pertes de charges hydrauliques.

Les extrémités d'autres colonnes de fluide 13.1-13.N pourront présenter une embouchure dans une chambre de gonflement ayant des profils courbes réguliers assurant des changements progressifs de section. Ces profils courbes situés en entrée et en sortie de certaines colonnes 13.1-13.N permettent de minimiser les pertes de charges.

Avantageusement, les colonnes 13.1-13.N sont configurées pour générer des pertes de charges hydrauliques différentes les unes par rapport aux autres.

Certaines chambres de gonflement hydraulique 15, 16.1-16.N pourront présenter une capacité de gonflement hydraulique, exprimée en bar par litre, ou une raideur de gonflement qui est non linéaire en fonction du volume de fluide contenu dans la chambre.

Selon certaines des préconisations précédentes, l'invention permet d'obtenir par exemple des courbes caractéristiques semblables à celles des figures 10a et 10b qui présentent respectivement l'évolution, en fonction de la fréquence, la raideur dynamique (exprimée en N/m) et le facteur de perte (sans unité) caractérisant le comportement global de la cale. Les évolutions de ces courbes sont à comparer à celles d'une cale hydraulique standard à une seule colonne dont la résonance fluide est positionnée dans la même gamme de fréquences, représentées en traits discontinus.

Les présentes courbes correspondent à des débattements relatifs imposés entre les deux points de fixation 11 et 12 de la cale 10 est de l'ordre du millimètre.

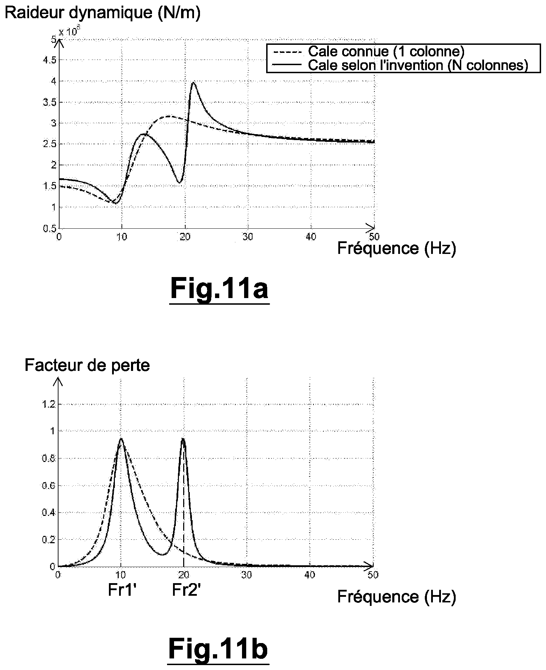

Les courbes sont présentées ici à titre d'exemple entre 0 et 50 Hz. Avec trois colonnes fluides, l'invention permet ainsi d'obtenir jusqu'à trois fréquences d'amortissement Fr1, Fr2 et Fr3, plus ou moins disjointes dans leurs effets sur les courbes caractéristiques. Les figures 11a et 11b montrent qu'il est possible de produire un pic d'amortissement (à la fréquence Fr2' vers 20 Hz) en plus de celui d'une cale classique à une colonne unique (à la fréquence Fr1' vers 10 Hz) sans augmentation du saut global de raideur dynamique et avec une augmentation maîtrisée du maximum de raideur.

Pour les exemples présentés aux figures 10a, 10b, 11a et 11b, le comportement à plus hautes fréquences est dans le prolongement de celui observé à 50 Hz. Plus généralement, la présente invention permet aussi de produire des cales 10 dont les courbes caractéristiques présentent ces mêmes types d'évolutions fréquentielles dans des gammes de fréquences plus hautes, en adaptant les paramètres de dimensionnement, étalant par exemple des pics de facteur de perte et/ou des chutes ou remontées de raideur dynamique de 0 à 300 Hz.

Différentes combinaisons de valeurs des paramètres de dimensionnement sont souhaitables, selon la forme des courbes caractéristiques que l'on désire obtenir pour la cale 10 utilisant un nombre plus ou moins grand de résonances fluides. Un des avantages de la présente invention est la grande variété d'évolutions fréquentielles des courbes caractéristiques de la cale 10 que l'on peut obtenir, ce qui permet des réglages optimaux de la cale 10 pour la réduction des niveaux vibratoires et le confort dans un véhicule donné. Ces réglages optimaux dépendent en pratique sensiblement des caractéristiques dynamiques particulières de chaque véhicule, ou plus généralement du système auquel est intégré la cale, c'est pourquoi il est important pour l'homme de l'art de pouvoir disposer d'un jeu étendu de paramètres utiles à l'adaptation et au contrôle de ces lois caractéristiques. En utilisant une cale classique à une colonne, seul un petit nombre de paramètres est en pratique modifiable, ce qui limite les capacités d'adaptation et d'optimisation.

Avec la présente invention il est ainsi possible de modifier les paramètres de dimensionnement li, Sci, Kg, Kmi, ainsi que les caractéristiques du fluide (masse volumique, viscosité notamment), la rugosité des parois des différents volumes accueillant du fluide, et encore la forme des embouchures des colonnes 13.1-13.N pour adapter les performances de la cale 10. La forme du volume fluide remplissant les chambres 15, 16.1-16.N (et donc la géométrie de celles-ci) peut également influer sur les performances du système. Si des paramètres influents sur le comportement et/ou le dimensionnement de la cale 10 n'ont pas de valeur préconisée, l'homme du métier comprend qu'il doit utiliser a priori les valeurs usuellement employées pour les cales connues.

## Revendications

1. Cale (10) amortissante hydraulique comportant :
- au moins deux colonnes de fluide (13.1-13.N),
- chaque colonne (13.1-13.N) ayant une extrémité mise en communication avec une première chambre de travail hydraulique (15) capable de gonflement hydraulique, dite aussi chambre de gonflement principale, cette chambre de gonflement principale (15) étant commune à toutes les colonnes de fluide (13.1-13.N),
- l'autre extrémité de chaque colonne de fluide (13.1-13.N) étant mise en communication avec une deuxième chambre de compensation hydraulique (16.1-16.N) spécifique à chaque colonne de fluide, ces deuxièmes chambres, dites aussi chambres de gonflement propres (16.1-16.N), étant également capables de gonflement hydraulique,
**caractérisée en ce qu'**au moins une des chambres de gonflement propres (16.1-16.N) a une raideur de gonflement (Kmi) de l'ordre de grandeur de la raideur de gonflement (Kg) de la chambre de gonflement principale (15) ou supérieure à la raideur de gonflement (Kg) de la chambre de gonflement principale (15).

2. Cale selon la revendication 1, **caractérisée en ce qu'**au moins une des chambres de gonflement propres (16.1-16.N) a une raideur de gonflement dont la valeur est comprise entre 0,5 fois et 1,5 fois la valeur de la raideur de gonflement de la chambre de gonflement principale (15).

3. Cale selon la revendication 1 ou 2, **caractérisée en ce qu'**au moins une des chambres de gonflement propres (16.1-16.N) a une raideur de gonflement (Kmj) plus faible que la raideur de gonflement de la chambre de gonflement principale (Kg).

4. Cale selon la revendication 3, **caractérisée en ce qu'**au moins une des chambres de gonflement propres (16.1-16.N) a une raideur de gonflement (Kmj) entre 1,2 fois et 10 fois plus faible que la raideur de gonflement (Kg) de la chambre de gonflement principale (15).

5. Cale selon l'une quelconque des revendications 1 à 4, **caractérisée en ce qu'**au moins un ratio d'un couple de valeurs (Kmi, Kmj) parmi les raideurs de gonflement des chambres de gonflement propres (16.1-16.N) est d'au moins 2.

6. Cale selon l'une quelconque des revendications 1 à 5, **caractérisée en ce que** les colonnes de fluide (13.1-13.N) sont configurées pour générer des pertes de charges hydrauliques différentes les unes par rapport aux autres.

7. Cale selon l'une quelconque des revendications 1 à 6, **caractérisée en ce que** certaines chambres de gonflement (15, 16.1-16.N) ont une capacité de gonflement hydraulique ou une raideur de gonflement non linéaire en fonction du volume de fluide contenu.

8. Cale selon l'une quelconque des revendications 1 à 7, **caractérisée en ce qu'**elle comporte un serpentin capable de gonflement assurant à la fois les fonctions hydrauliques de colonne de fluide et de chambre de gonflement propre.

9. Cale selon l'une quelconque des revendications 1 à 8, **caractérisée en ce qu'**elle comporte des systèmes destinés à un découplage hydraulique aux hautes fréquences et/ou aux faibles amplitudes agissant sur tout ou partie des effets des colonnes de fluide (13.1-13.N).

10. Cale selon l'une quelconque des revendications 1 à 9, **caractérisée en ce qu'**elle comporte un capuchon (19) participant à la formation et au maintien en position de chambres de gonflement propres (16.1, 16.2), ledit capuchon (19) étant apte à être fermé par rapport à l'extérieur ou mettre une membrane délimitant une des chambres de gonflement propres (16.1, 16.2) en relation avec la pression atmosphérique.

11. Cale selon l'une quelconque des revendications 1 à 10, **caractérisée en ce que** tout ou partie des colonnes de fluide (13.1-13.N) et des chambres de gonflement propres (16.1-16.N) sont positionnées dans une zone extérieure (Z2) de la chambre de gonflement principale (15).

12. Ensemble comprenant un premier élément et un second élément **caractérisé en ce qu'**il comporte une cale selon l'une quelconque des revendications précédentes comportant deux zones d'interface (11, 12) une des zones d'interface étant reliée au premier élément, l'autre zone d'interface étant reliée au second élément.

13. Ensemble selon la revendication précédente, **caractérisé en ce que** le premier élément est un moteur et le second élément une structure de véhicule.

14. Véhicule **caractérisé en ce qu'**il comprend un ensemble selon la revendication 12 ou la revendication 13.

## Patentansprüche

1. Hydraulische Dämpfungseinheit (10), die Folgendes umfasst:
- mindestens zwei Fluidsäulen (13.1-13.N),
- jede Säule (13.1-13.N) die ein Ende aufweist, das mit einer ersten hydraulischen Arbeitskammer (15) in Kommunikation gebracht ist, die zu hydraulischem Schwellen fähig ist, auch Hauptschwellkammer genannt, wobei diese Hauptschwellkammer (15) allen Fluidsäulen (13.1-13.N) gemeinsam ist,
- wobei das andere Ende jeder Fluidsäule (13.1-13.N) mit einer zweiten hydraulischen Kompensationskammer (16.1-16.N) in Kommunikation gebracht ist, die jeder Fluidsäule spezifisch ist, wobei diese zweiten Kammern, auch eigentliche Schwellkammern (16.1-16.N) genannt, auch fähig sind hydraulisch zu schwellen,
**dadurch gekennzeichnet, dass** mindestens eine der eigentlichen Schwellkammern (16.1-16.N) eine Schwellsteifigkeit (Kmi) in der Größenordnung der Schwellsteifigkeit (Kg) der Hauptschwellkammer (15) oder größer als die Schwellsteifigkeit (Kg) der Hauptschwellkammer (15) aufweist.

2. Einheit nach Anspruch 1, **dadurch gekennzeichnet, dass** mindestens eine der eigentlichen Schwellkammern (16.1-16.N) eine Schwellsteifigkeit aufweist, deren Wert zwischen 0,5 Mal und 1,5 Mal dem Schwellsteifigkeitswert der Hauptschwellkammer (15) liegt.

3. Einheit nach Anspruch 1 oder 2, **dadurch gekennzeichnet, dass** mindestens eine der eigentlichen Schwellkammern (16.1-16.N) eine Schwellsteifigkeit (Kmj) aufweist, die schwächer ist als die Schwellsteifigkeit der Hauptschwellkammer (Kg).

4. Einheit nach Anspruch 3, **dadurch gekennzeichnet, dass** mindestens eine der eigentlichen Schwellkammern (16.1-16.N) eine Schwellsteifigkeit (Kmj) zwischen 1,2 Mal und 10 Mal schwächer als die Schwellsteifigkeit (Kg) der Hauptschwellkammer (15) aufweist.

5. Einheit nach einem der Ansprüche 1 bis 4, **dadurch gekennzeichnet, dass** mindestens ein Verhältnis eines Wertepaares (Kmi, Kmj) unter den Schwellsteifigkeiten der eigentlichen Schwellkammern (16.1-16.N) mindestens 2 beträgt.

6. Einheit nach einem der Ansprüche 1 bis 5, **dadurch gekennzeichnet, dass** die Fluidsäulen (13.1-13.N) konfiguriert sind, um voneinander unterschiedliche Lastverluste zu erzeugen.

7. Einheit nach einem der Ansprüche 1 bis 6, **dadurch gekennzeichnet, dass** bestimmte Schwellkammern (15, 16.1-16.N) eine hydraulische Schwellkapazität oder eine Schwellsteifigkeit aufweisen, die in Abhängigkeit von dem enthaltenen Fluidvolumen nichtlinear ist.

8. Einheit nach einem der Ansprüche 1 bis 7, **dadurch gekennzeichnet, dass** sie eine Heizschlange umfasst, die zum Schwellen fähig ist, die sowohl die hydraulischen Fluidsäulenfunktionen als auch die Funktionen der eigentlichen Schwellkammer sicherstellt.

9. Einheit nach einem der Ansprüche 1 bis 8, **dadurch gekennzeichnet, dass** sie Systeme umfasst, die zu einem hydraulischen Abkoppeln bei hohen Frequenzen und/oder geringen Amplituden, die auf alle oder einen Teil der Effekte der Fluidsäulen (13.1-13.N) einwirken, umfasst.

10. Einheit nach einem der Ansprüche 1 bis 9, **dadurch gekennzeichnet, dass** sie eine Kappe (19) umfasst, die an dem Bilden und Positionshalten von eigentlichen Schwellkammern (16.1-16.2) beteiligt ist, wobei die Kappe (19) geeignet ist, bezüglich des Äußeren geschlossen zu sein oder eine Membran, die eine der eigentlichen Schwellkammern (16.1-16.2) abgrenzt, mit dem Luftdruck in Verbindung zu setzen.

11. Einheit nach einem der Ansprüche 1 bis 10, **dadurch gekennzeichnet, dass** alle oder ein Teil der Fluidsäulen (13.1-13.N) und der eigentlichen Schwellkammern (16.1-16.N) in einer äußeren Zone (Z2) der Hauptschwellkammer (15) positioniert sind.

12. Anordnung, die ein erstes Element und ein zweites Element umfasst, **dadurch gekennzeichnet, dass** sie eine Einheit nach einem der vorstehenden Ansprüche umfasst, die zwei Schnittflächenzonen (11, 12) umfasst, wobei eine der Schnittflächenzonen mit dem ersten Element verbunden ist, die andere Schnittflächenzone mit dem zweiten Element verbunden ist.

13. Anordnung nach dem vorstehenden Anspruch, **dadurch gekennzeichnet, dass** das erste Element ein Motor ist und das zweite Element ein Fahrzeugaufbau ist.

14. Fahrzeug, **dadurch gekennzeichnet, dass** es eine Einheit nach Anspruch 12 oder Anspruch 13 umfasst.

## Claims

1. A hydraulic damping block (10) comprising:
- at least two columns of fluid (13.1-13.N),
- each column (13.1-13.N) having one end placed in communication with a first hydraulic working chamber (15) capable of hydraulic inflation, also referred to as main inflation chamber, said main inflation chamber (15) being common to all the fluid columns (13.1-13.N),
- the other end of each fluid column (13.1-13.N) being placed in communication with a second hydraulic compensation chamber (16.1-16.N) specific to each fluid column, said second chambers, also referred to as specific inflation chambers (16.2-16.N), being likewise capable of hydraulic inflation,
**characterized in that** at least one of the specific inflation chambers (16.1-16.N) has an inflation stiffness (Kmi) of the order of magnitude of the inflation stiffness (Kg) of the main inflation chamber (15) or greater than the inflation stiffness (Kg) of the main inflation chamber (15).

2. The block according to Claim 1, **characterized in that** at least one of the specific inflation chambers (16.1-16.N) has an inflation stiffness, the value of which is comprised between 0.5 times and 1.5 times the value of the inflation stiffness of the main inflation chamber (15).

3. The block according to Claim 1 or 2, **characterized in that** at least one of the specific inflation chambers (16.1-16.N) has an inflation stiffness (Kmj) weaker than the inflation stiffness of the main inflation chamber (Kg).

4. The block according to Claim 3, **characterized in that** at least one of the specific inflation chambers (16.1-16.N) has an inflation stiffness (Kmj) between 1.2 times and 10 times weaker than the inflation stiffness (Kg) of the main inflation chamber (15).

5. The block according to one of Claims 1 to 4, **characterized in that** at least one ratio of a pair of values (Kmi, Kmj) among the inflation stiffnesses of the specific inflation chambers (16.1-16.N) is at least 2.

6. The block according to any one of Claims 1 to 5, **characterized in that** the columns of fluid (13.1-13.N) are configured to generate hydraulic load losses which are different with respect to one another.

7. The block according to any one of Claims 1 to 6, **characterized in that** certain inflation chambers (15, 16.1-16.N) have a hydraulic inflation capacity or an inflation stiffness which is non-linear as a function of the volume of contained fluid.

8. The block according to any one of Claims 1 to 7, **characterized in that** it comprises a coil capable of inflation ensuring both the hydraulic functions of the fluid column and of the specific inflation chamber.

9. The block according to any one of Claims 1 to 8, **characterized in that** it comprises systems intended for a hydraulic decoupling at high frequencies and/or at low amplitudes acting over all or part of the effects of the fluid columns (13.1-13.N).

10. The block according to any one of Claims 1 to 9, **characterized in that** it comprises a cap (19) taking part in the formation and in the maintaining in position of specific inflation chambers (16.1-16.2), said cap (19) being able to be closed with respect to the exterior or to place a membrane delimiting one of the specific inflation chambers (16.1-16.2) in relation with the atmospheric pressure.

11. The block according to any one of Claims 1 to 10, **characterized in that** all or part of the columns of fluid (13.1-13.N) and of the specific inflation chambers (16.1-16.N) are positioned in an exterior zone (Z2) of the main inflation chamber (15).

12. An assembly including a first element and a second element, **characterized in that** it comprises a block according to any one of the preceding claims comprising two interface zones (11, 12), one of the interface zones being connected to the first element, the other interface zone being connected to the second element.

13. The assembly according to the preceding claim, **characterized in that** the first element is an engine and the second element is a vehicle structure.

14. A vehicle, **characterized in that** it includes an assembly according to Claim 12 or Claim 13.
